(19)

Europäisches Patentamt
European Patent Office
Office européen des brevets

(11) **EP 3 936 565 B1**

(12) **EUROPEAN PATENT SPECIFICATION**

(45) Date of publication and mention
of the grant of the patent:
**12.03.2025  Bulletin 2025/11**

(21) Application number: **20184412.3**

(22) Date of filing: **07.07.2020**

(51) International Patent Classification (IPC):
**C08L 23/12** (2006.01)     **C08F 210/06** (2006.01)

(52) Cooperative Patent Classification (CPC):
(C-Sets available)
**C08L 23/12; C08F 210/06;** C08F 110/06;
C08L 2205/03; C08L 2205/035; C08L 2205/08;
C08L 2207/02; C08L 2207/20      (Cont.)

(54) **POLYPROPYLENE POLYETHYLENE MIXTURE UPGRADING**

AUFWERTUNG EINES POLYPROPYLEN-POLYETHYLEN-GEMISCHS

MISE À NIVEAU DE MÉLANGE DE POLYPROPYLÈNE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.01.2022  Bulletin 2022/02**

(73) Proprietor: **Borealis AG**
**1020 Vienna (AT)**

(72) Inventors:
• **Kahlen, Susanne Margarete**
**4021 Linz (AT)**

• **Shutov, Pavel**
**4021 Linz (AT)**
• **Tran, Tuan Anh**
**4021 Linz (AT)**

(74) Representative: **Maiwald GmbH**
**Elisenhof**
**Elisenstraße 3**
**80335 München (DE)**

(56) References cited:
**EP-A1- 3 165 473        WO-A1-2015/169690
WO-A1-2020/070175      WO-A1-2020/070176**

EP 3 936 565 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6465;**
**C08F 210/06, C08F 4/6546;**

**C08L 23/12, C08L 23/06, C08L 23/142,**
**C08L 23/12, C08L 23/16;**
C08F 110/06, C08F 2500/12, C08F 2500/35;
C08F 210/06, C08F 210/16, C08F 2500/12,
C08F 2500/17, C08F 2500/35, C08F 2500/27,
C08F 2500/34, C08F 2500/31

**Description**

**Field of Invention**

The present invention relates to heterophasic polymers suitable for upgrading mixtures of polypropylene and polyethylene, particularly for upgrading recycled polyolefin materials and to the use of such heterophasic polymers for upgrading mixtures of polypropylene and polyethylene. The present invention also concerns upgraded polypropylene polyethylene compositions.

**Background**

Mixtures of polypropylene and polyethylene are characterized by limited miscibility. When processing such mixtures into final products, the mechanical and optical properties limit the possible applications to non-demanding ultra-low cost applications such as park benches or geotextile reinforcements. Blend morphology is one of the decisive hurdles towards valuable applications which is particularly visible in the field of recycled materials. Very common recycling streams contain polyethylene and polypropylene next to a number of byproducts. Separation can be carried out using density separation in water and then further separation based on fluorescence, near infrared absorption or Raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE), this is especially true for post-consumer waste streams. Moreover, recycled polyolefin materials are often cross-contaminated with non-polyolefin materials such as polyethylene terephthalate, polyamide, polystyrene or non-polymeric substances like wood, paper, glass or aluminum further limiting morphology. The use of various compatibilizers is known in the art. Jun Xu et al, Macromolecules 2018, 51 (21), 8585-8596 described the use of diblock, tetrablock, and hexablock copolymers (BCPs) for compatibilization of isotactic polypropylene and HDPE. The authors have also described that the use of ethylene propylene rubber (EPR) and ethylene propylene diene monomer (EPDM) rubber result in phase separation problems and, when used in higher amounts, compromises the tensile strength. Olefin block copolymers (OBCs) are reported to be good compatibilizers for mixtures of PE and iPP such as described by Munro J. et al, Proc. SPE ANTEC 2017, 961-966. However, the broad use of OBCs is limited due to the challenging and costly production method. Another group of compatibilizers are ethylene octene elastomers (EO rubbers) which are also rather expensive and may deteriorate stiffness. The use of heterophasic copolymers and heterophasic random copolymers for upgrading a recycled polyolefin stream has been described in literature mostly dealing with stiffness and impact properties. WO2007071494A1 teaches the use of heterophasic polyolefin compositions having a flexural modulus of lower than 600 MPa within a broad melt flow rate range of 0.5 to 20 g/10min and broad elongation at break range of 100 to 1000%. Inter alia, a low MFR (0.6 g/10 min) heterophasic polyolefin "HC2" including two fractions of propylene copolymers, a first propylene random copolymer and a second essentially linear ethylene/propylene copolymer being insoluble in xylene as well as an ethylene propylene rubber with an intrinsic viscosity of 3.2 dl/g has been exemplified for upgrading recyclates having a PE/PP ratio of about 18. Compatibilizer "HC2" was further subjected to visbreaking yielding a MFR of 8 g/10min and used for recyclates having a PE/PP ratio of about 1. It turned out that the elongation at break values of the upgraded compositions are only satisfactory at undesirable high amounts of heterophasic polyolefin.

Thus, there is a deeply felt need in the art for further compatibilizers for PP/PE mixtures for improving mechanical performances, i.e. improving the balance between flowability (MFR), stiffness (as measured by Tensile modulus ISO 1873-2), impact strength (Charpy Notched Impact Strength ISO 179-1 eA at +23 °C and at -20 °C), and particularly elongation at break (ISO 527-2) as well as room temperature puncture (23°C) resistance and especially cold puncture resistance (at 0°C and -20°C) at low amounts of compatibilizer.

**Summary of the Invention**

The present invention is concerned with a heterophasic copolymer according to claim 1 for compatibilization of a polypropylene/polyethylene blend (A) said polypropylene/polyethylene blend (A) having one or more of the following properties:

  (i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm;
  (ii) a content of fatty acid(s) as determined by using solid phase microextraction (HS-SPME-GC-MS) of 0.1 to 100 ppm,
  (iii) a content of polyamide(s) as determined by NMR of 0.05 to 1.5 wt.-%; (iv) a content of polystyrene(s) as determined by NMR of 0.05 to 3.0 wt.-%.

The present invention is further concerned with the use of the heterophasic copolymer as a compatibilizer according to claim 5. The present invention further concerns a process for upgrading a polypropylene-polyethylene blend (A) comprising (A-1) polypropylene and (A-2) polyethylene whereby the weight ratio of polypropylene (A-1) to polyethylene (A-2) is 19:1 to 1:19 as claimed in claim 6. The present invention also concern a polypropylene-polyethylene composition as set forth in claim 7 as well as an article comprising this polypropylene-polyethylene composition as set forth in claim 11.

The present invention provides the use of a compatibilizer (B) being a heterophasic copolymer comprising a matrix phase and an elastomer phase dispersed therein, whereby the matrix phase includes a random polypropylene copolymer, and whereby the heterophasic copolymer has

-    a melt flow rate $MFR_2$ (230°C, ISO1133) of 2.0 to 30 g/10min, and
-    at least one melting point Tm1 in the range of 154 to 168°C,
-    optionally a second melting point Tm2 in the range of 130 to 160°C
-    optionally a second or third melting point Tm3 in the range of 110 to 125°C,
-    a xylene cold insoluble content (XCI) of from 60 to 80 wt.-%, preferably 70 to 80 wt.-% (ISO 16152, 1ed, 25°C), and
-    a xylene cold soluble content (XCS) of 20 to 40 wt.-% (ISO 16152, 1ed, 25°C), wherein the xylene cold insoluble content (XCI) and the xylene cold soluble content (XCS) add up to 100 wt.-%.
-    a content of units derived from ethylene in the xylene cold insoluble content (XCI) of from 2.0 to 6.0 wt.-%, preferably 2.3 to 3.5 wt.-% and
-    a content of units derived from ethylene in the xylene cold soluble content (XCS) of 20.0 to 40.0 wt.-%, preferably of 25.0 to 35.0 wt.%;
-    the xylene cold soluble content (XCS) having an intrinsic viscosity (measured in decalin according to DIN ISO 1628/1 at 135°C) of 2.1 dl/g to less than 6.0 dl/g, preferably 3.0 to 5.0 dl/g, most preferably 3.3 to 4.3 dl/g

for upgradinga polypropylene-polyethylene blend (A) comprising

(A-1) polypropylene and
(A-2) polyethylene

whereby the weight ratio of polypropylene (A-1) to polyethylene (A-2) is 19:1 to 1:19
as to at least one or more of the following properties

(i) elongation at break (ISO 527-2)
(ii) Charpy notched impact strength (1eA) (non-instrumented, ISO 179-1 at +23 °C)
(iii) Charpy notched impact strength (1eA) (non-instrumented, ISO 179-1 at +0 °C)
(iv) Charpy notched impact strength (1eA) (non-instrumented, ISO 179-1 at -20 °C)
(v) puncture resistance (energy, ISO7785-2 at 23°C)
(vi) low temperature puncture resistance (energy, ISO 7765-2 at 0°C or -20°C), wherebycompatibilizer (B) is used in an amount of 1 to 35 wt.-% preferably 2 to 25 wt.-%, more preferably 3 to 9 wt.-% with respect to the final composition and whereby the polypropylene-polyethylene blend (A) has one or more of the following properties: (i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm; (ii) a content of fatty acid(s) as determined by using solid phase microextraction (HS-SPME-GC-MS) of 0.1 to 100 ppm (iii) a content of polyamide(s) as determined by NMR of 0.05 to 1.5 wt.-%; (iv) a content of polystyrene(s) as determined by NMR of 0.05 to 3.0 wt.-%

The present invention further provides a process for upgrading a polypropylene-polyethylene blend (A) comprising

(A-1) polypropylene and
(A-2) polyethylene

whereby the weight ratio of polypropylene (A-1) to polyethylene (A-2) is 19:1 to 1:19

as to at least one or more of the following properties

(i) elongation at break (ISO 527-2)
(ii) Charpy notched impact strength (1eA) (non-instrumented, ISO 179-1 at +23 °C)
(iii) Charpy notched impact strength (1eA) (non-instrumented, ISO 179-1 at 0 °C)

(iv) Charpy notched impact strength (1eA) (non-instrumented, ISO 179-1 at -20 °C)
(v) puncture resistance (energy, ISO7785-2 at 23°C)
(vi) low temperature puncture resistance (energy, ISO 7765-2 at 0°C or -20°C) by melt blending said polypropylene-polyethylene blend (A)

a compatibilizer (B) in an amount of 1 to 35 wt.-% preferably 2 to 25 wt.-%, more preferably 3 to 9 wt.-% with respect to the final composition, whereby the compatibilizer (B) is a heterophasic copolymer comprising a matrix phase and an elastomer phase dispersed therein, whereby the matrix phase includes a random polypropylene copolymer and whereby the heterophasic copolymer has

- a melt flow rate $MFR_2$ (230°C, ISO1133) of 2.0 to 30 g/10min, and
- at least one melting point Tm1 in the range of 154 to 168°C,
- optionally a second melting point Tm2 in the range of 130 to 160°C,
- optionally a second or third melting point Tm3 in the range of 110 to 125°C,
- a xylene cold insoluble content (XCI) of from 60 to 80 wt.-%, preferably 70 to 80 wt.-% (ISO 16152, 1ed, 25°C), and
- a xylene cold soluble content (XCS) of 20 to 40 wt.-%, preferably of 20 to 30 wt.% (ISO 16152, 1ed, 25°C), wherein the xylene cold insoluble content (XCI) and the xylene cold soluble content (XCS) add up to 100 wt.-%.
- a content of units derived from ethylene in the xylene cold insoluble content (XCI) of from 2.0 to 6.0 wt.-%, preferably 2.3 to 3.5 wt.-% and
- a content of units derived from ethylene in the xylene cold soluble content (XCS) of 20.0 to 40.0 wt.-%, preferably of 25.0 to 35.0 wt.%;
- the xylene cold soluble content (XCS) having an intrinsic viscosity (measured in decalin according to DIN ISO 1628/1 at 135°C) of 2.1 dl/g to less than 6.0 dl/g, preferably 3.0 to 5.0 dl/g, more preferably 3.3 to 4.3 dl/g,

whereby the polypropylene-polyethylene blend (A) has one or more of the following properties: (i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm; (ii) a content of fatty acid(s) as determined by using solid phase microextraction (HS-SPME-GC-MS) of 0.1 to 100 ppm (iii) a content of polyamide(s) as determined by NMR of 0.05 to 1.5 wt.-%; (iv) a content of polystyrene(s) as determined by NMR of 0.05 to 3.0 wt.-%.

In a further aspect, the present invention provides a polypropylene-polyethylene composition obtainable by blending

a) 65 to 99 wt.-%, preferably 75 to 98 wt.-%, more preferably to 91 to 97 wt.-% of a polypropylene-polyethylene blend (A) comprising

A-1) polypropylene,
A-2) polyethylene,

wherein the weight ratio of polypropylene to polyethylene is from 19:1 to 1:19 and
b) 1 to 35 wt.-% preferably 2 to 25 wt.-%, more preferably 3 to 9 wt.-% of a compatibilizer (B) being a heterophasic copolymer comprising a matrix phase and an elastomer phase dispersed therein, whereby the matrix phase includes a random polypropylene copolymer, and whereby
the heterophasic copolymer has

- a melt flow rate $MFR_2$ (230°C, ISO1133) of 2.0 to 30 g/10min, and
- at least one melting point Tm1 in the range of 154 to 168°C,
- optionally a second melting point Tm2 in the range of 130 to 160°C,
- optionally a second or third melting point Tm3 in the range of 110 to 125°C,
- a xylene cold insoluble content (XCI) of from 60 to 80 wt.-%, preferably 70 to 80 wt.-% (ISO 16152, 1ed, 25°C), and
- a xylene cold soluble content (XCS) of 20.0 to 40.0 wt.-%, preferably of 20 to 30 wt.% (ISO 16152, 1ed, 25°C), wherein the xylene cold insoluble content (XCI) and the xylene cold soluble content (XCS) add up to 100 wt.-%;
- a content of units derived from ethylene in the xylene cold insoluble content (XCI) of from 2.0 to 6.0 wt.-%, preferably 2.3 to 3.5 wt.-% and
- a content of units derived from ethylene in the xylene cold soluble content (XCS) of 20.0 to 40.0 wt.-%, preferably of 25.0 to 35.0 wt.%
- the xylene cold soluble content (XCS) having an intrinsic viscosity (measured in decalin according to DIN ISO 1628/1 at 135°C) of 2.1 dl/g to less than 6.0 dl/g, preferably 3.0 to 5.0 dl/g, most preferably 3.3 to 4.3 dl/g and

- wherein the ratio of MFR$_2$ (blend (A)) / MFR$_2$ (compatibilizer(B)) ((ISO1133, 2.16 kg load at 230 °C), is in the range 0.1 to 12.5,
- whereby the polypropylene-polyethylene blend (A) has one or more of the following properties: (i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm; (ii) a content of fatty acid(s) as determined by using solid phase microextraction (HS-SPME-GC-MS) of 0.1 to 100 ppm (iii) a content of polyamide(s) as determined by NMR of 0.05 to 1.5 wt.-%; (iv) a content of polystyrene(s) as determined by NMR of 0.05 to 3.0 wt.-%

In yet a further aspect, the present invention provides a heterophasic copolymer according to claim 1 for compatibilization of polypropylene/polyethylene blends comprising a matrix phase and an elastomer phase dispersed therein, whereby the matrix phase includes a random polypropylene copolymer and, whereby the heterophasic copolymer has

- a melt flow rate MFR$_2$ (230°C, ISO1133) of 2.0 to 30 g/10min, and
- at least one melting point Tm1 in the range of 154 to 168°C,
- optionally a second melting point Tm2 in the range of 130 to 160°C,
- optionally a second or third melting point Tm3 in the range of 110 to 125°C,
- a xylene cold insoluble content (XCI) of from 60 to 80 wt.-%, preferably 70 to 80 wt.-% (ISO 16152, 1ed, 25°C), and
- a xylene cold soluble content (XCS) of 20 to 40 wt.-%, preferably 20 to 30 wt.-% (ISO 16152, 1ed, 25°C), wherein the xylene cold insoluble content (XCI) and the xylene cold soluble content (XCS) add up to 100 wt.-%.
- a content of units derived from ethylene in the xylene cold insoluble content (XCI) of from 2.0 to 6.0 wt.-%, preferably 2.3 to 3.5 wt.-% and
- a content of units derived from ethylene in the xylene cold soluble content (XCS) of 20.0 to 40.0 wt.-%, preferably of 25.0 to 35.0 wt.%;

the xylene cold soluble content (XCS) having an intrinsic viscosity (measured in decalin according to DIN ISO 1628/1 at 135°C) of 2.1 dl/g to less than 6.0 dl/g, preferably 3.0 to 5.0 dl/g, most preferably 3.3 to 4.3 dl/g.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more. A propylene homopolymer-random copolymer matrix phase of the compatibilizer (B), i.e. of the heterophasic copolymer according to the present invention denotes a matrix phase being composed of a propylene homopolymer mixed with a random polypropylene copolymer. The presence of two polymers, i.e. a first polypropylene homopolymer and a second polypropylene random copolymer may be detected by the presence of two melting points within the ranges as specified such as by two recognizable peaks or a peak and a shoulder by the differential scanning calorimetry (DSC). "Upgrading" means improving one or more properties such as elongation at break, Charpy notched impact or particle morphology of the reactant blend such that the resulting composition, i.e. the combination of the reactant blend and the compatibilizer, shows one or more properties superior to the reactant blend. Dispersed phase particle morphology describes the size distribution of the particles of the dispersed phase as observable by microscopy. "Upgrading" of the dispersed phase particle morphology means that the morphology of the dispersed phase as observed by microscopy and optionally analyzed by image analysis is refined..

For the purpose of the present invention

- an increase of the elongation at break (ISO 527-2) by at least 50%, particularly 100% as to the starting value;
- an increase of the Charpy notched impact strength (1eA) (non-instrumented, ISO 179-1 at +23 °C) by at least 5.0 %, particularly 10% as to the starting value;
- an increase of the Charpy notched impact strength (1eA) (non-instrumented, ISO 179-1 at 0 °C) by at least 5.0 %, particularly 10% as to the starting value;
- an increase of the Charpy notched impact strength (1eA) (non-instrumented, ISO 179-1 at -20 °C) by at least 5.0 %, particularly 10% as to the starting value;
- an increase of puncture energy (ISO 7765-2 at +23°C) of at least 15% with respect to the starting material;

- an increase of puncture energy (ISO 7765-2 at -20°C or at 0°C) of at least 15% with respect to the starting material shall be considered "upgrading" or "improving".

For the purposes of the present description, the term "recycled waste" or "recycled material" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer. The term "virgin" denotes the newly produced materials and/or objects prior to their first use, which have not already been recycled. Virgin materials and recycled materials easily can be differentiated based on absence or presence of contaminants such as limonene and/or fatty acids and/or paper and/or wood. Polypropylene-polyethylene blends also can be differentiated with respect to their origin by presence of polystyrene and/or polyamide. Residual content denotes a content above the detection limit. Many different kinds of polyethylene or polypropylene can be present in "recycled material". The ratio polypropylene (A-1) versus polyethylene plus polyethylene copolymer (A-2) is determined experimentally by using isotactic polypropylene (iPP) and high density polyethylene (HDPE) for calibration. A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components. A propylene random copolymer is a copolymer of propylene monomer units and comonomer units in which the comonomer units are distributed randomly over the polypropylene chain. A "compatibilizer" is a substance in polymer chemistry, which is added to a blend of polymers with limited miscibility in order to increase their stability. "Polypropylene-polyethylene blend" refers to a composition containing both polypropylene and polyethylene including also polypropylene copolymers as well as polyethylene copolymers. As a direct determination of the polypropylene content and polyethylene content is not possible, the weight ratio polypropylene (A-1) to polyethylene (A-2) of 19:1 to 1:19 denotes the equivalent ratio as determined from calibration by iPP and HDPE and determination by IR spectroscopy. The term "elastomer" denotes a natural or synthetic polymer having elastic properties. The term "XCS" refers to the xylene cold soluble content (XCS wt.-%) determined at 25 °C according to ISO 16152. The term "XCI" refers to the xylene cold insoluble content (XCI wt.-%) determined at 25 °C according to ISO 16152. If not indicated otherwise "%" refers to weight-%. Presence of a heterophasic nature can be easily determined by the number of glass transition points. Reactor blend is a blend originating from the production in two or more reactors coupled in series or in a reactor having two or more reaction compartments. A reactor blend alternatively may result from blending in solution. A reactor blend stands in contrast to a compound as produced by melt extrusion.

**Compatibilizer**

The compatibilizer according to the present invention is a heterophasic copolymer comprising a matrix phase and an elastomer phase dispersed therein, whereby the matrix phase includes a random polypropylene copolymer and also a polypropylene homopolymer. The skilled person will instantly recognize presence of a polypropylene homopolymer, which easily can be detected by differential scanning calorimetry, by e.g. melting peak analysis. In other words, the presence of at least one melting point Tm1 in the range of 154 to 168°C indicates the presence of a polypropylene homopolymer. Usually heterophasic copolymers include either a polypropylene homopolymer matrix (commonly denoted HECO) or they include a random polypropylene copolymer matrix (commonly denoted RAHECO), whereby such matrix may also be composed of two random polypropylene copolymers differing as to their molecular weight distribution and/or their comonomer content. The heterophasic copolymer according to the present invention has a melt flow rate $MFR_2$ (230°C, ISO1133) of 2.0 to 30 g/10min, preferably 5.0 to 15.0 g/10 min, most preferably 6.0 to 15.0 g/10min. The heterophasic copolymer according to the present invention further has to have at least one melting point Tm1 in the range of 154 to 168°C. As explained above, such melting point(s) signal(s) the presence of a homopolymer. Optionally a second melting point Tm2 in the range of 130 to 160°C originating from the random polypropylene copolymer is present. It is possible that the melting point of the random polypropylene copolymer within a temperature range of 130 to 160°C is clearly visible. However, usually this will not be the case and the melting point will appear as a shoulder in the DSC thermogram. The heterophasic copolymer according to the present invention optionally has at least a second or third melting point Tm3 in the range of 110 to 125°C. Such melting point(s) originates from polyethylene. The heterophasic copolymer according to the present invention further has to have a xylene cold insoluble content (XCI) of from 60 to 80 wt.-%, preferably 70 to 80 wt.-% (ISO 16152, 1ed, 25°C) and a xylene cold soluble content (XCS) of 20 to 40 wt.-%, preferably 20 to 30 wt.-% (ISO 16152, 1ed, 25°C), whereby the xylene cold insoluble content (XCI) and xylene cold soluble content (XCS) add up to 100 wt.-%. The amount of xylene cold soluble content should not be too high as this may deteriorate stiffness and it should also not be too low as otherwise impact and puncture resistances may not be sufficient. A skilled person will understand that both, the matrix component and the elastomer component contribute to the xylene cold soluble content. As can be seen from the experimental part, the propylene homopolymer - polypropylene random copolymer mixture, i.e. the mixture constituting the matrix component as produced in reactors one and two has a relatively high xylene cold soluble content.

The heterophasic copolymer according to the present invention further has a content of units derived from ethylene in the xylene cold insoluble content (XCI) of from 2.0 to 6.0 wt.-%, preferably from 2.3 to 3.5 wt.-%. Moreover, the content of units derived from ethylene in the xylene cold soluble content (XCS) of the heterophasic copolymer according to the present invention is 20.0 to 40.0 wt.-%, preferably of 25.0 to 35.0 wt.%. In a further aspect the xylene cold soluble content (XCS) of the heterophasic copolymer according to the present invention may have an intrinsic viscosity (measured in decalin according to DIN ISO 1628/1 at 135°C) within a broad range of 2.1 dl/g to less than 6.0 dl/g. Preferably the intrinsic viscosity of the xylene cold soluble content (XCS) is within the range of 3.0 to 5.0 dl/g and most preferably within the range of 3.3 to 4.3 dl/g. Such IV(XCS) range is particularly beneficial for impact and puncture resistance. In yet a further preferred aspect, the xylene cold soluble content (XCS) includes units derived from ethylene and propylene only. In other words, the elastomer can only be a copolymer of propylene and ethylene.

The heterophasic copolymer according to the present invention preferably is a reactor blend of a propylene homopolymer, a random polypropylene copolymer and an ethylene propylene rubber. Thus, the heterophasic copolymer according to the present invention easily can be made in various types of polymer plants such as a Borstar® configuration (loop reactor - gas phase reactor 1 - gas phase reactor 2), Spheripol configuration (loop reactor 1 - loop reactor 2 - gas phase reactor 1), Spheripol configuration with liquid propylene as barrier gas and other common types of production plants.

The heterophasic copolymer according to the present invention, i.e. the compatibilizer (B), preferably has a tensile modulus of at least 625 MPa, more preferably at least 650 MPa and most preferably at least 700 MPa (measured according to ISO 527-2).

In a further aspect, the heterophasic copolymer according to the present invention, i.e. the compatibilizer (B) according to the present invention, has a total content of units derived from ethylene of 6.0 to 12.0 wt.-%.

In a specific embodiment compatibilizer (B) is made by using a Ziegler Natta catalyst. If so, the at least one melting point Tm1 in the range of 154 to 168°C will be found within the range of 161 to 168 °C. Compatibilizers having at least one melting point Tm1 in the range of 161 to 168 °C are preferred due to processability and cost advantages.

**Polypropylene-polyethylene blend (A)**

The polypropylene-polyethylene blend (A) according to present invention has one or more of the following properties

 a) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm;
 b) a content of fatty acid(s) as determined by using solid phase microextraction (HS-SPME-GC-MS) of 0.1 to 100 ppm;
 c) a content of polyamide(s) as determined by NMR of 0.05 to 1.5 wt.-%;
 d) a content of polystyrene(s) as determined by NMR of 0.05 to 3.0 wt.-%

Preferably the polypropylene-polyethylene blend (A) according to present invention is a recycled material, more preferably originates from household trash.

The polypropylene-polyethylene blend (A) according to the present invention comprises

 (A-1) polypropylene and
 (A-2) polyethylene
 whereby the weight ratio of polypropylene (A-1) to polyethylene (A-2) is 19:1 to 1:19.

It should be understood that polypropylene-polyethylene blend (A) may vary broadly in composition, i.e. may include polypropylene homopolymer, polypropylene copolymer, polyethylene, and polyethylene copolymers. As a direct determination of the polypropylene content and polyethylene content is not possible, the weight ratio polypropylene (A-1) to polyethylene (A-2) is 19:1 to 1:19 is the equivalent ratio as determined from calibration by iPP and HDPE.

Conventionally the polypropylene-polyethylene blend (A) according to the present invention may have one or more of the following:

- residual PET determined as described in the experimental part;
- residual talc and chalk content as described in the experimental part;
- residual content of metals (determined by x ray fluorescence (XRF)
- residual amount of paper as described in the experimental part
- residual amount of wood as described in the experimental part

- total free fatty acid content of 0.1 to 100 ppm as measured by using headspace solid phase micro-extraction (HS-SPME-GC-MS).

**Use for upgrading**

The compatibilizer according to the present invention is used for upgrading a polypropylene-polyethylene blend (A) comprising

(A-1) polypropylene and
(A-2) polyethylene
whereby the weight ratio of polypropylene (A-1) to polyethylene (A-2) is 19:1 to 1:19.
at least as to one or more of the following properties

(i) elongation at break (ISO 527-2)
(ii) Charpy notched impact strength (1eA) (non-instrumented, ISO 179-1 at +23 °C)
(iii) Charpy notched impact strength (1eA) (non-instrumented, ISO 179-1 at -20 °C)
(iv) an increase of puncture energy (ISO 7765-2 at 23°C) of 15% with respect to the starting material;
(v) an increase of low temperature puncture energy (ISO 7765-2 at -20°C or 0°C) of 15% with respect to the starting material.

According to the present invention, compatibilizer (B) is used in an amount of 1 to 35 wt.-% preferably 2 to 25 wt.-%, more preferably 3 to 9 wt.-% with respect to the final composition. Higher amounts of compatibilizer than the indicated maximum values of 35 wt.-%, preferably 25 wt.-% and most preferably 9 wt.-% should be avoided as otherwise the elongation at break and/or the stiffness may again be compromised.

**Polypropylene-polyethylene composition**

Preferred aspects as to the polypropylene-polyethylene composition according to the present invention are described in the following.

The polypropylene-polyethylene composition according to the present invention should have a relatively high stiffness. Thus, the compatibilizer (B) preferably has a tensile modulus of at least 625 MPa, more preferably at least at least 650 MPa and most preferably as described above.

**Article**

The present invention also concerns an article comprising, preferably consisting of the polypropylene-polyethylene composition as described above.

**Detailed Description**

In a particularly preferred embodiment the heterophasic copolymer for compatibilization of polypropylene/polyethylene blends comprises a matrix phase and an elastomer phase dispersed therein, whereby the matrix phase includes a random polypropylene copolymer and, whereby the heterophasic copolymer has

- a melt flow rate $MFR_2$ (230°C, ISO1133) of 2.0 to 30 g/10min, and
- at least one melting point Tm1 in the range of 154 to 168°C,
- optionally a second melting point Tm2 in the range of 130 to 160°C,
- optionally a second or third melting point Tm3 in the range of 110 to 125°C,
- a xylene cold insoluble content (XCI) of from 70 to 80 wt.-% (ISO 16152, 1ed, 25°C), and
- a xylene cold soluble content (XCS) of 20 to 30 wt.-% (ISO 16152, 1ed, 25°C), wherein the xylene cold insoluble content (XCI) and the xylene cold soluble content (XCS) add up to 100 wt.-%.
- a content of units derived from ethylene in the xylene cold insoluble content (XCI) of from 2.0 to 6.0 wt.-%, preferably 2.3 to 3.5 wt.-% and
- a content of units derived from ethylene in the xylene cold soluble content (XCS) of 25.0 to 35.0 wt.-%;
- the xylene cold soluble content (XCS) having an intrinsic viscosity (measured in decalin according to DIN ISO 1628/1 at 135°C) of 3.3 to 4.3 dl/g.

This heterophasic copolymer preferably has a tensile modulus of at least 650 MPa (measured according to ISO 527-2). In a further aspect, the matrix of this heterophasic copolymer includes, preferably consists of a polypropylene homopolymer - random polypropylene copolymer mixture. In yet a further aspect, the xylene cold soluble content (XCS) of this heterophasic copolymer includes units derived from ethylene and propylene only. Moreover, it is also preferred that this heterophasic copolymer is a reactor blend of a propylene homopolymer, a random polypropylene copolymer and an ethylene propylene rubber.

In the following two particularly preferred embodiments shall be described.

The polypropylene-polyethylene composition according to a first specific and preferred embodiment of the present invention preferably has one or more of the following properties

- Charpy notched impact strength (1eA) (non-instrumented, ISO 179-1 at +23 °C) of at least 7.0 kJ/m$^2$ and/or
- Charpy notched impact strength (1eA) (non-instrumented, ISO 179-1 at -20 °C) of at least 2.5 kJ/m$^2$ and/or
- elongation at break (ISO 527-2) of at least 200 %, particularly 300%;
- a tensile modulus of at least 800 MPa (ISO 527-2).;

- a puncture energy (ISO 7765-2 at +23°C) of at least 4.0 J;

- a puncture energy (ISO 7765-2 at -20°C) of at least 0.6 J.

A good Charpy notched impact strength (1eA) (non-instrumented, ISO 179-1 at +23 °C) of at least 7.0 kJ/m$^2$ easily can be achieved by use of higher amounts of compatibilizer. Intrinsic viscosity of the xylene cold soluble content IV(XCS) within the range of 3.3 to 4.3 dl/g favors Charpy notched impact strength (1eA) (non-instrumented, ISO 179-1 at -20°C) of at least 2.5 kJ/m$^2$. Good elongation at break (ISO 527-2) of at least 200 %, particularly 300% requires limited amounts of compatibilizer and preferably an intrinsic viscosity of the xylene cold soluble content IV(XCS) of 3.0 to 5.0 dl/g, more preferably 3.3 to 4.3 dl/g. A tensile modulus of at least 800 MPa can only be achieved with a limited amount of compatibilizer and optionally xylene cold soluble content at the lower end of the range foreseen.

Blend (A), i.e. preferably the recyclate as contained in this first specific and preferred embodiment preferably has one or more of the following features:

- a ratio of polypropylene versus polyethylene of 2:1 to 1:2;
- tensile modulus (ISO 527-2) of at least 900 MPa;
- melt flow rate MFR$_2$ (ISO1133, 230°C, 2.16 kg)) of 3.0 to 10.0 g/10min.

The polypropylene-polyethylene composition according to a second specific and preferred embodiment of the present invention preferably has one or more of the following properties:

- a tensile modulus (ISO 527-2) of at least 1200 MPa, and/or
- an elongation at break (ISO 527-2) of at least 40 %.

Blend (A), i.e. preferably the recyclate as contained in this second specific and preferred embodiment preferably has one or more of the following features:

- a ratio of polypropylene versus polyethylene of 19:1 to 10:1;
- tensile modulus (ISO 527-2) of at least 1100 MPa;
- melt flow rate MFR$_2$ (ISO1133, 230°C, 2.16 kg)) of 7.0 to 25.0 g/10min, preferably 7.0 to 17.0 g/10min.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

**a) Amount of iPP, Polystyrene, Polyethylene (and ethylene containing copolymers), poly(ethylene terephthalate), and amount of Polyamide-6**

To establish different calibration curves different standards, iPP and HDPE and iPP, PS and PA6 were blended. For the quantification of the content of the foreign polymers, IR spectra were recorded in the solid-state using a Bruker Vertex 70 FTIR spectrometer. Films were prepared with a compression-molding device at 190 °C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 cm-1, an aperture of 6 mm, a spectral resolution of 2 cm-1, 16 background scans, 16 spectrum scans, an interferogram zero filling factor of 32 and Norton Beer strong apodization.

The absorption of the band at 1167 cm-1 in iPP is measured and the iPP content is quantified according to a calibration curve (absorption/thickness in cm versus iPP content in weight %).

The absorption of the band at 1601 cm-1 (PS) and 3300 cm-1 (PA6) are measured and the PS and PA6 content quantified according to the calibration curve (absorption/thickness in cm versus PS and PA content in wt.-%). The content of polyethylene and ethylene containing copolymers is obtained by subtracting (iPP+PS+PA6) from 100, taking into account the content of non-polymeric impurities as determined in the methods below. The analysis is performed as a double determination.

**b) Tensile modulus and Tensile strain at break**

were measured according to ISO 527-2 (cross head speed = 1 mm/min; test speed 50 mm/min at 23 °C) using injection molded specimens 1B prepared as described in EN ISO 1873-2 (dog bone shape, 4 mm thickness). The measurement was done after 96 h conditioning time at 23 °C of the specimen.

**c) The impact strength**

was determined as Charpy Notched Impact Strength according to ISO 179-1 eA at +23 °C, at 0°C, and at -20 °C on injection molded specimens of 80 x 10 x 4 mm$^3$ prepared according to EN ISO 1873-2. The measurement was done after 96 h conditioning time at 23 °C of the specimen.

**d) Instrumented Puncture Test**

Instrumented puncture test was performed on 60x60x1 mm$^3$ injection-molded plaques at 23°C, 0°C and -20°C according to ISO6603-2:2000. The measurement was done after 96 h conditioning time at 23 °C of the specimen.

**e) Comonomer content**

**Poly(propylene-co-ethylene) - ethylene content - IR spectroscopy**

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative $^{13}$C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.% produced at either pilot or full scale under a variety of conditions. The calibration set was selected to reflect the typical variety of copolymers encountered by the final quantitative IR spectroscopy method. Quantitative IR spectra were recorded in the solid-state using a Bruker Vertex 70 FTIR spectrometer. Spectra were recorded on 25x25 mm square films of 300 $\mu$m thickness prepared by compression moulding at 180 - 210°C and 4 - 6 MPa. For samples with very high ethylene contents (>50 mol%) 100 $\mu$m thick films were used. Standard transmission FTIR spectroscopy was employed using a spectral range of 5000-500 cm$^{-1}$, an aperture of 6 mm, a spectral resolution of 2 cm$^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 cm$^{-1}$ ($A_Q$) corresponding to $(CH_2)_{>2}$ structural units (integration method G, limits 762 and 694 cm$^{-1}$). The quantitative band was normalised to the area of the CH band at 4323 cm$^{-1}$ ($A_R$) corresponding to CH structural units (integration method G, limits 4650, 4007 cm$^{-1}$). The ethylene content in units of weight percent was then predicted from the normalised absorption ($A_Q / A_R$) using a quadratic calibration curve. The calibration curve having previously been constructed by ordinary least squares (OLS) regression of the normalised absorptions and primary comonomer contents measured on the calibration set. **Poly(propylene-co-ethylene) - ethylene content** - $^{13}$C **NMR spectroscopy** Quantitative $^{13}$C{$^1$H} NMR spectra were recorded in the solution-state using a Bruker Avance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475).

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al. J. Mag. Reson. 187 (2007) 225, and in Busico, V., et al, Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to $E = 0.5( S\beta\beta + S\beta\gamma + S\beta\delta + 0.5( S\alpha\beta + S\alpha\gamma ))$ Through the use of this set of sites the corresponding integral equation becomes $E = 0.5( I_H + I_G + 0.5( I_C + I_D ))$ using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: E [mol%] = 100 * fE. The weight percent comonomer incorporation was calculated from the mole fraction: E [wt.%] = 100 * (fE * 28.06 ) / ( (fE * 28.06) + ((1-fE) * 42.08) ).

### f) PE, PS, PA, PET and TiO$_2$ content

Contents were determined using a film thickness method using the intensity of the quantitative band I(q) and the thickness of the pressed film T using the following relationship: [ I(q) / T ]m + c = C where m and c are the coefficients determined from the calibration curve constructed using the comonomer contents obtained from $^{13}$C-NMR spectroscopy.

Comonomer content was measured in a known manner based on Fourier transform infrared spectroscopy (FTIR) calibrated with $^{13}$C-NMR, using Nicolet Magna 550 IR spectrometer together with Nicolet Omnic FTIR software. Films having a thickness of about 250 μm were compression molded from the samples. Similar films were made from calibration samples having a known content of the comonomer. The comonomer content was determined from the spectrum from the wave number range of from 1430 to 1100 cm$^{-1}$. The absorbance was measured as the height of the peak by selecting the so-called short or long base line or both. The short base line was drawn in about 1410 - 1320 cm$^{-1}$ through the minimum points and the long base line about between 1410 and 1220 cm$^{-1}$. Calibrations needed to be done specifically for each base line type. Also, the comonomer content of the unknown sample was within the range of the comonomer contents of the calibration samples.

### g) Talc and chalk content

TGA according to the following procedure:
Thermogravimetric Analysis (TGA) experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO$_2$) was assigned to CO$_2$ evolving from CaCO$_3$, and therefore the chalk content was evaluated as:

$$\text{Chalk content} = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

### h) MFR

Melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

### i) Amount of Metals

was determined by x ray fluorescence (XRF)

### j) Amount of Paper, Wood

Paper and wood were determined by conventional laboratory methods including milling, floatation, microscopy and Thermogravimetric Analysis (TGA).

### k) Limonene Measurement

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar. the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

GCMS Parameters:

    Column: 30 m HP 5 MS 0.25*0.25
    Injector: Splitless with 0.75 mm SPME Liner, 270°C
    Temperature program: -10°C ( 1 min)
    Carrier gas: Helium 5.0, 31 cm/s linear velocity, constant flow
    MS: Single quadrupole, direct interface, 280°C interface temperature
    Acquisition: SIM scan mode
    Scan parameter: 20-300 amu
    SIM Parameter: m/Z 93, 100 ms dwell time

### l) Total free fatty acid content

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250°C
Temperature program: 40°C ( 1 min) @6°C/min to 120°C, @15°C to 245 °C (5 min) Carrier: Helium 5.0, 40 cm/s linear velocity, constant flow
MS: Single quadrupole, direct interface, 220°C inter face temperature Acquisition: SIM scan mode
Scan parameter: 46-250 amu 6.6 scans/s
SIM Parameter: m/z 60,74, 6.6 scans/s

**m) Glass transition temperatures**

were determined by dynamic mechanical thermal analysis according to ISO 6721-7. The measurements were done in torsional deformation mode on compression moulded samples (40x10x1 mm$^3$) between -130 °C and +160 °C with a heating rate of 2 °C/min and a frequency of 1 Hz using TA Ares G2 test apparatus.

**Experiments**

Compatibilizers CE1 and IE1 to IE4 were made in bench scale in a three-phase (bulk, gas phase 1 and gas phase 2) polymerization setup.
The catalyst used in the polymerization processes of the inventive IE1-IE4 and comparative examples CE1 was prepared as follows:
Used chemicals:
20 % solution in toluene of butyl ethyl magnesium (Mg(Bu)(Et), BEM), provided by Chemtura; 2-ethylhexanol, provided by Amphochem; 3-Butoxy-2-propanol - (DOWANOL™ PnB), provided by Dow; bis(2-ethylhexyl)citraconate, provided by SynphaBase; TiCl4, provided by Millenium Chemicals; Toluene, provided by Aspokem; Viscoplex® 1-254, provided by Evonik; Heptane, provided by Chevron.
Preparation of a Mg alkoxy compound:
Mg alkoxide solution was prepared by adding, with stirring (70 rpm), into 11 kg of a 20 wt% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45°C. After addition was completed, mixing (70 rpm) of the reaction mixture was continued at 60°C for 30 minutes. After cooling to room temperature 2.3 kg g of the donor bis(2-ethylhexyl)citraconate was added to the Mg-alkoxide solution keeping temperature below 25°C. Mixing was continued for 15 minutes under stirring (70 rpm).
Preparation of solid catalyst component:
20.3 kg of TiCl4 and 1.1 kg of toluene were added into a 20 l stainless steel reactor. Under 350 rpm mixing and keeping the temperature at 0°C, 14.5 kg of the Mg alkoxy compound prepared in example 1 was added during 1.5 hours. 1.7 l of Viscoplex® 1-254 and 7.5 kg of heptane were added and after 1 hour mixing at 0°C the temperature of the formed emulsion was raised to 90°C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50°C and during the second wash to room temperature.
The thus obtained catal st was used along with triethyl-aluminium (TEAL) as cocatalyst and dicyclopentyl dimethoxy silane (D-Donor) as donor.
The virgin polymer powders (IE1-IE4 and CE1) or pellets (CE2-CE4) were compounded with recycled material pellets (blend A #1, blend A #2) in a co-rotating twin-screw extruder ZSK-18 Megalab at 220°C with 0.2 wt% Irganox B225 antioxidant and 0.05 wt% calcium stearate to produce the recyclate containing compounds.
In the Comparative Example CE2 SB815MO was used.
In the Comparative Example CE3 ED007HP was used.
In the Comparative Example CE4 SC876CF was used.
Commercial grade SB815MO is available from Borealis AG, Austria and is a nucleated propylene-ethylene random heterophasic copolymer having a MFR of 1.5 g/10 min, melting temperature of 150°C, a total C2 content of 8.0 wt% and an XCS content of 28 wt%.
Commercial grade ED007HP is available from Borealis AG, Austria and is a nucleated propylene-ethylene heterophasic copolymer having a MFR of 5.5 g/10 min, melting temperature of 167°C, a total C2 content of 6.5 wt% and an XCS content of 25 wt%. Commercial grade SC876CF is available from Borealis AG, Austria and is a nucleated propylene-ethylene random heterophasic copolymer having a MFR of 3.8 g/10 min, melting temperature of 150°C, a total C2 content of 13.0 wt% and an XCS content of 43 wt%.
Table 1 summarizes the process conditions and the features obtained.

**Table 1 Preparation of Compatibilizers**

| | | IE1 | IE2 | IE3 | IE4 | CE1 |
|---|---|---|---|---|---|---|
| **Reactor 1** | **Bulk** | | | | | Matrix Only |
| Temperature | [°C] | 70 | 70 | 70 | 70 | 70 |
| Pressure | [barg] | 33.9 | 31.5 | 33.9 | 33.8 | 33.9 |
| Residence time | [h] | 0.50 | 0.50 | 0.50 | 0.50 | 0.50 |
| split | [wt.-%] | 43.4 | 44.9 | 40.5 | 42.3 | 50.3 |
| H2/C3 | [mol/kmol] | 8.5 | 3.5 | 8.5 | 8.5 | 8.5 |
| MFR | [g/10min] | 90 | 25 | 90 | 90 | 90 |
| XCS | [wt.-%] | 3.2 | 3.2 | 3.2 | 3.2 | 3.2 |
| C2 | [wt.-%] | 0 | 0 | 0 | 0 | 0 |
| **Reactor 2** | **GPR1** | | | | | |
| Temperature | [°C] | 80 | 80 | 80 | 80 | 80 |
| Pressure | [barg] | 25 | 25 | 25 | 25 | 25 |
| Residence time | [h] | 0.74 | 0.58 | 0.66 | 0.64 | 0.78 |
| Split, | [wt.-%] | 41.8 | 40.5 | 44.2 | 42.6 | 49.7 |
| C2/C3 | [mol/kmol] | 121 | 99 | 108 | 101 | 103 |
| H2/C2 | [mol/kmol] | 266 | 321 | 309 | 336 | 330 |
| H2/C3 | [mol/kmol] | 32 | 32 | 33 | 34 | 34 |
| MFR | [g/10min] | 22 | 12 | 22 | 22 | 22 |
| XCS | [wt.-%] | 16.5 | 16.5 | 16.5 | 16.5 | 16.5 |
| C2 | [wt.-%] | 4.5 | 4.5 | 4.5 | 4.5 | 4.5 |
| C2/XCS | [wt.-%] | 17.3 | 17.3 | 17.3 | 17.3 | 17.3 |
| IV/XCS | [dl/g] | 1.32 | 1.32 | 1.32 | 1.32 | 1.32 |
| **Reactor 3** | **GPR2** | | | | | |
| Temperature | [°C] | 80 | 80 | 80 | 80 | - |
| Pressure | [barg] | 14 | 25 | 25 | 14 | - |
| Residence time | [h] | 0.44 | 0.24 | 0.45 | 0.52 | - |
| Split, | [wt.-%] | 14.9 | 14.6 | 15.3 | 15.1 | - |
| C2/C3 | [mol/kmol] | 638 | 165 | 168 | 618 | - |
| H2/C2 | [mol/kmol] | 5 | 25 | 0 | 0 | - |
| **Final** | | | | | | |
| MFR, total | [g/10min] | 9.8 | 7.5 | 7.1 | 8.6 | 22.1 |
| C2 total | [wt.-%] | 11.1 | 7.3 | 8.2 | 11.1 | 4.5 |
| XCS | [wt.-%] | 29.6 | 27.1 | 29.7 | 25.1 | 16.5 |
| C2/XCS | [wt.-%] | 26.8 | 21.1 | 21.7 | 28.4 | 17.3 |
| IV/XCS | [dl/g] | 3.19 | 2.37 | 3.88 | 4.23 | 1.32 |

Table 2 shows the properties of the compatibilizers and compatibilizers used for comparative purposes.

**Table 2: Properties of Compatibilizers and Comparative Compatibilizers**

| | CE1-Comp 1 (Matri x only) | IE1-Comp 1 | IE2-Comp 2 | IE3-Comp 3 | IE4-Comp 4 | CE2-Comp 2 (RAHE CO1) | CE3-Comp 3 (HECO 1) | CE4-Comp 4 (RAHE CO 2) |
|---|---|---|---|---|---|---|---|---|
| Homopolym er +random copolymer of matrix | Yes | Yes | Yes | Yes | Yes | No | No | No |
| MFR2 (230°C, ISO1133) g/10min | 22.1 | 9.8 | 7.5 | 7.1 | 8.6 | 1.8 | 5.0 | 5.0 |
| Tm1 °C | 165 | 165 | 165 | 165 | 165 | 150 | 167 | 150 |
| Tm2 °C | shoulder | | | | | shoulder | - | shoulder |
| Tm3 °C | | 117 | | | 117 | | | |
| XCI Wt.-% | 83.5 | 70.4 | 72.9 | 70.3 | 74.9 | 72.0 | 74.0 | 63.6 |
| XCS Wt.-% | 16.5 | 29.6 | 27.1 | 29.7 | 25.1 | 28.0 | 26.0 | 36.4 |
| C2 (XCI) Wt.-% | 2.7 | 3.0 | 2.6 | 2.9 | 2.7 | 3.9 | 2.2 | 5.9 |
| C2 (XCS) Wt.-% | 17.3 | 26.8 | 21.1 | 21.7 | 28.4 | 17.8 | 28.0 | 28.7 |
| IV (XCS) dl/g | 1.3 | 3.2 | 2.4 | 3.9 | 4.2 | 2.0 | 6.8 | 1.8 |
| C2 total | 4.5 | 11.1 | 7.3 | 8.2 | 11.1 | 7.0 | 6.8 | 12.8 |
| Elongation at break % ISO 527-2 | 500 | 560 | 480 | 540 | 500 | 450 | 150 | 850 |
| Tensile modulus | 990 | 700 | 740 | 700 | 770 | 500 | 1100 | 400 |
| Charpy NIS ISO 179 1eA + 23 °C; kJ/m$^2$ | 5 | 73 | 68 | 76 | 76 | 73 | 35 | 76 |
| Charpy NIS ISO 179 1eA 20 °C; kJ/m$^2$ | 1.0 | 3.4 | 1.5 | 2.1 | 5.0 | 1.1 | 6.0 | 2.0 |

Inventive Compatibilizer 1 had a moderately high IV(XCS) of 3.2 dl/g and moderate C2(XCS) of 26.8 wt.-%. Inventive Compatibilizer 2 had a low IV(XCS) of 2.4 dl/g and relatively low C2(XCS) of 21.1 wt.-%. Inventive Compatibilizer 3 had a high IV(XCS) of 3.9 dl/g and relatively low C2(XCS) of 21.7 wt.-%. Inventive Compatibilizer 4 had a high IV(XCS) of 4.2 dl/g and moderate C2(XCS) of 28.4 wt.-%. Comparative Compatibilizer 1 was a mixture of a propylene homopolymer and a random propylene ethylene copolymer. Comparative Compatibilizer 2 was a random heterophasic polypropylene copolymer with a low IV(XCS) of 2.0 dl/g and low C2(XCS) of 17.8 wt.-%. Comparative Compatibilizer 3 was a heterophasic polypropylene copolymer with a high IV(XCS) of 6.8 dl/g and moderate C2(XCS) of 28.0 wt.-%. Comparative Compatibilizer 4 was a random heterophasic polypropylene copolymer with a low IV(XCS) of 1.8 dl/g and moderate C2(XCS) of 28.7 wt.-%.

Table 3 shows the properties of the polypropylene / polyethylene blends (A) as used for the evaluation.

**Table 3: Properties of Polypropylene / Polyethylene Blends Mixtures (Blend A)**

| | Blend A # 1 | Blend A #2 |
|---|---|---|
| PP / PE ratio | 3:2 | 13 : 1 |
| Recycling origin | yes | yes |
| limonene | > 0.1 ppm | > 0.1 ppm |
| MFR2 (230°C, ISO1133), g/10min | 5.0 | 15.0 |
| Tensile modulus, ISO 527-2, MPa | 950 | 1390 |
| Elongation at break % (ISO 527-2) | 130 | 24 |
| Charpy NIS + 23 °C ISO 179 1eA, kJ/m$^2$ | 6.7 | 5.2 |

(continued)

|  | Blend A # 1 | Blend A #2 |
|---|---|---|
| Charpy NIS -20 °C ISO 179 1eA, kJ/m$^2$ | 2.2 | - |
| Charpy NIS 0 °C ISO 179 1eA, kJ/m$^2$ | - | 3.6 |
| IPT ISO 7765-2, +23°C, 4.4 m/s, 1 mm: Puncture Energy, J | 1.8 | 1.9 |
| IPT ISO 7765-2, +23°C, 4.4 m/s, 1 mm: Max. Force, N | 6.9 x 10$^2$ | 8.2 $\times$ 10$^2$ |
| IPT ISO 7765-2, -20°C or 0°C, 4.4 m/s, 1 mm: Puncture Energy, J | 0.3 (-20°C) | 0.9 (0°C) |
| IPT ISO 7765-2, -20°C or 0°C, 4.4 m/s, 1 mm: Max. Force, N | 2.6 x 10$^2$ (-20°C) | 5.5 x 10$^2$ (0°C) |

Both blends showed inacceptable elongation at break properties.

Blend A #1 and Blend A #2 were blended with compatibilizers and comparative compatibilizers in varying amounts as described above.

**Table 4 shows the properties as obtained for upgraded compositions using blend A #1.**

| | amount of compatibilizer | Tensile Modulus, MPa (ISO 527-2) | Elongation at Break, % (ISO 527-2) | Charpy NIS: +23°C, kJ/m² (ISO 179 1eA) | Charpy NIS (-20°C), kJ/m² (ISO 179 1eA) | IPT ISO 7765-2, +23°C, 4.4 m/s, 1 mm: Puncture Energy, J | IPT ISO 7765-2, +23°C, 4.4 m/s, 1 mm: Max. Force, N | IPT ISO 7765-2, -20°C, 4.4 m/s, 1 mm: Puncture Energy, J | IPT ISO 7765-2, -20°C, 4.4 m/s, 1 mm: Max. Force, N | Heat Deflection Temp., Met. B/0.45 MPa (ISO 75-2), °C |
|---|---|---|---|---|---|---|---|---|---|---|
| CE1-comp1 | 5 | 890 | 162 | 6.3 | 2.7 | 2.3 | 760 | 0.8 | 545 | 66.9 |
| IE1-Comp1 | 5 | 868 | 300 | 6.9 | 2.3 | 2.7 | 804 | 0.7 | 459 | 69.2 |
| IE2-Comp2 | 5 | 854 | 326 | 6.6 | 2.2 | 3.8 | 922 | 0.9 | 572 | 70.2 |
| IE3-Comp3 | 5 | 854 | 333 | 7.4 | 3.1 | 4.2 | 951 | 0.7 | 497 | 67.3 |
| IE4-Comp4 | 5 | 856 | 339 | 7.6 | 3.0 | 4.2 | 948 | 1.1 | 643 | 67.1 |
| CE2-Comp2 | 5 | 864 | 271 | 7.4 | 2.9 | 3.6 | 914 | 0.7 | 500 | 67.1 |
| CE3-Comp3 | 5 | 950 | 80 | 7.2 | 2.4 | 1.4 | 750 | 0.4 | 408 | 68.5 |
| CE4-Comp4 | 5 | 908 | 343 | 7.7 | 3.2 | 2.4 | 777 | 0.4 | 299 | 66.7 |
| CE1-comp1 | 15 | 922 | 159 | 6.4 | 2.2 | 1.5 | 627 | 0.2 | 204 | 68.5 |
| IE1-Comp1 | 15 | 872 | 311 | 8.7 | 2.9 | 2.5 | 767 | 0.6 | 434 | 66.4 |
| IE2-Comp2 | 15 | 890 | 269 | 7.8 | 2.3 | 1.7 | 653 | 0.4 | 278 | 66.6 |
| IE3-Comp3 | 15 | 872 | 343 | 8.4 | 2.8 | 1.8 | 665 | 0.4 | 325 | 66.4 |
| IE4-Comp4 | 15 | 876 | 328 | 8.9 | 3.1 | 2.2 | 723 | 0.5 | 377 | 66.6 |
| CE2-Comp2 | 15 | 885 | 301 | 8.4 | 2.8 | 1.9 | 692 | 0.3 | 256 | 67.0 |
| CE3-Comp3 | 15 | 959 | 21 | 8.3 | 2.8 | 1.1 | 877 | 0.6 | 610 | 69.7 |
| CE4-Comp4 | 15 | 827 | 442 | 9.4 | 3.3 | 3.0 | 847 | 0.5 | 411 | 65.2 |
| CE1-comp1 | 30 | 931 | 102 | 6.7 | 2.0 | 1.4 | 622 | 0.1 | 165 | 70.3 |
| IE1-Comp1 | 30 | 807 | 162 | 11.8 | 3.6 | 2.9 | 817 | 0.9 | 611 | 65.7 |
| IE2-Comp2 | 30 | 830 | 226 | 9.3 | 2.6 | 2.1 | 736 | 0.3 | 241 | 65.8 |
| IE3-Comp3 | 30 | 801 | 304 | 10.7 | 3.0 | 2.8 | 805 | 0.4 | 324 | 64.3 |
| IE4-Comp4 | 30 | 818 | 163 | 11.9 | 3.8 | 2.7 | 765 | 1.0 | 598 | 65.3 |
| CE2-Comp2 | 30 | 817 | 257 | 10.6 | 2.8 | 2.3 | 778 | 0.3 | 266 | 66.0 |

(continued)

| | amount of compatibilizer | Tensile Modulus, MPa (ISO 527-2) | Elongation at Break, % (ISO 527-2) | Charpy NIS: +23°C, kJ/m² (ISO 179 1eA) | Charpy NIS (-20°C), kJ/m² (ISO 179 1eA) | IPT ISO 7765-2, +23°C, 4.4 m/s, 1 mm: Puncture Energy, J | IPT ISO 7765-2, +23°C, 4.4 m/s, 1 mm: Max. Force, N | IPT ISO 7765-2, -20°C, 4.4 m/s, 1 mm: Puncture Energy, J | IPT ISO 7765-2, -20°C, 4.4 m/s, 1 mm: Max. Force, N | Heat Deflection Temp., Met. B/0.45 MPa (ISO 75-2), °C |
|---|---|---|---|---|---|---|---|---|---|---|
| CE3-Comp3 | 30 | 972 | 29 | 11.1 | 3.7 | 5.0 | 981 | 1.2 | 683 | 70.5 |
| CE4-Comp4 | 30 | 715 | 408 | 12.3 | 3.7 | 4.1 | 902 | 1.0 | 622 | 60.8 |

It can be seen that all compatibilizers according to the present invention increase elongation at break to desirable values already in surprisingly low amount of 5 wt.-%. At higher compatibilizer loadings of 30 w.-% this effect begins to disappear. Charpy NIS (+23°C) profits from increased compatibilizer loading, whereas Charpy NIS (-20°C) turned out to be less dependent on the compatibilizer loading. The improvement as to elongation at break could be achieved with marginal deterioration of stiffness of about 100 MPa. Very significant increase of the room temperature puncture resistance and especially cold puncture resistance was shown by the inventive compatibilizers 2, 3 and 4 (by 100-300%) at desirable low loadings of only 5%. At desirable low loadings of compatibilizer, compatibilizers # 3 and #4 according to the present invention both having relatively high IV(XCS) of 3.9 and 4.2 dl/g surprisingly showed the best balance of properties.

**Table 5 shows the properties as obtained for upgraded composition using blend A #2.**

| | amount of compatibilizer | Tensile Modulus, MPa (ISO 527-2) | Elongation at Break, % (ISO 527-2) | Charpy NIS: +23°C, kJ/m² (ISO 179 1eA) | Charpy NIS (0°C), kJ/m² (ISO 179 1eA) | IPT ISO 7765-2, +23°C, 4.4 m/s, 1 mm: Puncture Energy, J | IPT ISO 7765-2, +23°C, 4.4 m/s, 1 mm: Max. Force, N | IPT ISO 7765-2, -0°C, 4.4 m/s, 1 mm: Puncture Energy, J | IPT ISO 7765-2, -0°C, 4.4 m/s, 1 mm: Max. Force, N | Heat Deflection Temp., Met. B/0.45 MPa (ISO 75-2), °C |
|---|---|---|---|---|---|---|---|---|---|---|
| CE1-Comp1 | 5 | 1415 | 42 | 5.2 | 3.5 | 1.7 | 728 | 0.9 | 562 | 88.1 |
| IE1-Comp1 | 5 | 1397 | 42 | 5.8 | 3.5 | 2.6 | 874 | 1.4 | 730 | 87.1 |
| IE2-Comp2 | 5 | 1399 | 47 | 5.7 | 3.5 | 1.9 | 750 | 1.3 | 710 | 88.3 |
| IE3-Comp3 | 5 | 1395 | 43 | 5.8 | 3.7 | 2.5 | 863 | 1.1 | 634 | 87.6 |
| IE4-Comp4 | 5 | 1397 | 45 | 5.8 | 3.6 | 2.3 | 816 | 1.0 | 568 | 87.3 |
| CE2-Comp2 | 5 | 1397 | 55 | 5.8 | 3.5 | 2.1 | 803 | 0.8 | 515 | 87.5 |
| CE1-Comp1 | 15 | 1346 | 47 | 5.2 | 3.4 | 1.3 | 544 | 0.9 | 582 | 84.5 |
| IE1-Comp1 | 15 | 1268 | 68 | 6.9 | 4.6 | 1.8 | 720 | 2.0 | 889 | 81.9 |
| IE2-Comp2 | 15 | 1284 | 74 | 6.4 | 3.9 | 1.2 | 609 | 1.1 | 660 | 83.5 |
| IE3-Comp3 | 15 | 1266 | 75 | 6.6 | 3.8 | 1.9 | 746 | 1.4 | 708 | 82.9 |
| IE4-Comp4 | 15 | 1286 | 57 | 6.9 | 4.2 | 1.9 | 744 | 1.5 | 698 | 83.0 |
| CE2-Comp2 | 15 | 1262 | 64 | 6.1 | 3.7 | 1.3 | 624 | 1.1 | 620 | 82.8 |

EP 3 936 565 B1

Surprisingly, tensile modulus had not been negatively affected when using a desirable low amount of 5 wt.-% compatibilizer and had been compromised by only about 100 MPa at a compatibilizer loading of 15 wt.-%. Simultaneously elongation at break could be increased from 24% to at least 40%. At 5% compatibilizer loading, the Charpy NIS (+23°C) could only marginally be increased, whereas no change was observed for Charpy NIS at 0°C. At higher compatibilizer loading (15%), some notable Charpy NIS (+23°C) increase was observed (from 5.2 up to 6.5-7.0 kJ/m$^2$) as well as some marginal increase of Charpy NIS at 0°C. Heat deflection temperature was not affected at 5% compatibilizer loading, whereas there was some strong reduction from 87°C down to 83°C at 15 % of compatibilizer. It can be seen the compatibilizers according to the present invention are alternative compatibilizers which may replace standard HECO's and RAHECO's such as comparative compatibilizers CE3-Comp3 and CE4-Comp4.

**Claims**

1. Heterophasic copolymer for compatibilization of a polypropylene/polyethylene blend (A) said polypropylene/polyethylene blend (A) having one or more of the following properties:

   (i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm;
   (ii) a content of fatty acid(s) as determined by using solid phase microextraction (HS-SPME-GC-MS) of 0.1 to 100 ppm
   (iii) a content of polyamide(s) as determined by NMR of 0.05 to 1.5 wt.-%;
   (iv) a content of polystyrene(s) as determined by NMR of 0.05 to 3.0 wt.-% whereby said heterophasic copolymer comprises a matrix phase and an elastomer phase dispersed therein, whereby the matrix phase includes a random polypropylene copolymer, and whereby
   the heterophasic copolymer has

      - a melt flow rate MFR$_2$ (230°C, ISO1133) of 2.0 to 30 g/10min, and
      - at least one melting point Tm1 in the range of 154 to 168°C,
      - optionally a second melting point Tm2 in the range of 130 to 160°C,
      - optionally a second or third melting point Tm3 in the range of 110 to 125°C,
      - a xylene cold insoluble content (XCI) of from 60 to 80 wt.-%, preferably 70 to 80 wt.-% (ISO 16152, 1ed, 25°C), and
      - a xylene cold soluble content (XCS) of 20 to 40 wt.-%, preferably 20 to 30 wt.-% (ISO 16152, 1ed, 25°C), wherein the xylene cold insoluble content (XCI) and the xylene cold soluble content (XCS) add up to 100 wt.-%.
      - a content of units derived from ethylene in the xylene cold insoluble content (XCI) of from 2.0 to 6.0 wt.-%, preferably 2.3 to 3.5 wt.-% and
      - a content of units derived from ethylene in the xylene cold soluble content (XCS) of 20.0 to 40.0 wt.-%, preferably of 25.0 to 35.0 wt.%;

   the xylene cold soluble content (XCS) having an intrinsic viscosity (measured in decalin according to **DIN** ISO 1628/1 at 135°C) of 2.1 dl/g to less than 6.0 dl/g, preferably 3.0 to 5.0 dl/g, more preferably 3.3 to 4.3 dl/g, and whereby optionally the heterophasic copolymer has a tensile modulus of at least 650 MPa (measured according to ISO 527-2).

2. Heterophasic copolymer according claim 1, whereby the matrix phase includes, preferably consists of a polypropylene homopolymer - random polypropylene copolymer mixture.

3. Heterophasic copolymer according claim 1 or 2, whereby the xylene cold soluble content (XCS) includes units derived from ethylene and propylene only.

4. Heterophasic copolymer according to any one of claims 1 to 3, whereby the heterophasic copolymer is a reactor blend of a propylene homopolymer, a random polypropylene copolymer and an ethylene propylene rubber.

5. Use of the heterophasic copolymer according to any one of claims 1 to 4 as a compatibilizer (B),

   for upgrading a polypropylene-polyethylene blend (A) comprising

(A-1) polypropylene and
(A-2) polyethylene

whereby the weight ratio of polypropylene (A-1) to polyethylene (A-2) is 19:1 to 1:19
as to at least one or more of the following properties

(i) elongation at break (ISO 527-2)
(ii) Charpy notched impact strength (1eA) (non-instrumented, ISO 179-1 at +23 °C);
(iii) Charpy notched impact strength (1eA) (non-instrumented, ISO 179-1 at 0 °C);
(iv) Charpy notched impact strength (1eA) (non-instrumented, ISO 179-1 at -20 °C);
(v) puncture resistance (energy, ISO7785-2 at +23°C)
(vi) low temperature puncture resistance (energy, ISO 7765-2 at 0°C or -20°C) whereby compatibilizer
(B) is used in an amount of 1 to 35 wt.-% preferably 2 to 25 wt.-%, more preferably 3 to 9 wt.-% with
respect to the final composition,

whereby the polypropylene-polyethylene blend (A) has one or more of the following properties:

(i) a content of limonene as determined by using solid phase microextraction (HS-SPME-GC-MS) of from
0.1 ppm to 100 ppm, preferably from 0.1 ppm to 50 ppm, more preferably from 0.1 ppm to 20 ppm, most
preferably from 0.1 ppm to 5 ppm;
(ii) a content of fatty acid(s) as determined by using solid phase microextraction (HS-SPME-GC-MS) of
0.1 to 100 ppm
(iii) a content of polyamide(s) as determined by NMR of 0.05 to 1.5 wt.-%;
(iv) a content of polystyrene(s) as determined by NMR of 0.05 to 3.0 wt.-%

6. Process for upgrading

a polypropylene-polyethylene blend (A) comprising
(A-1) polypropylene and
(A-2) polyethylene

whereby the weight ratio of polypropylene (A-1) to polyethylene (A-2) is 19:1 to 1:19
as to at least one or more of the following properties

(i) elongation at break (ISO 527-2)
(ii) Charpy notched impact strength (1eA) (non-instrumented, ISO 179-1 at +23 °C)
(iii) Charpy notched impact strength (1eA) (non-instrumented, ISO 179-1 at 0 °C)
(iv) Charpy notched impact strength (1eA) (non-instrumented, ISO 179-1 at -20 °C)
(v) puncture resistance (energy, ISO7785-2 at +23°C)
(vi) low temperature puncture resistance (energy, ISO 7765-2 at 0°C or -20°C) by melt blending said
polypropylene-polyethylene blend (A) with a compatibilizer (B) in an amount of 1 to 35 wt.-% preferably 2
to 25 wt.-%, more preferably 3 to 9 wt.-% with respect to the final composition, whereby the compatibilizer
(B) is a heterophasic copolymer according to any one of claims 1 to 4, and

whereby polypropylene-polyethylene blend (A) has one or more of the following properties:

(i) a content of limonene as determined by using solid phase microextraction (HS-SPME-GC-MS) of from
0.1 ppm to 100 ppm, preferably from 0.1 ppm to 50 ppm, more preferably from 0.1 ppm to 20 ppm, most
preferably from 0.1 ppm to 5 ppm;
(ii) a content of fatty acid(s) as determined by using solid phase microextraction (HS-SPME-GC-MS) of
0.1 to 100 ppm
(iii) a content of polyamide(s) as determined by NMR of 0.05 to 1.5 wt.-%;
(iv) a content of polystyrene(s) as determined by NMR of 0.05 to 3.0 wt.-%

7. A polypropylene-polyethylene composition obtainable by blending

a) 65 to 99 wt.-%, preferably 75 to 98 wt.-%, more preferably to 91 to 97 wt.-% of a polypropylene-polyethylene
blend (A) comprising

A-1) polypropylene,
A-2) polyethylene,
wherein the weight ratio of polypropylene to polyethylene is from 19:1 to 1:19 and

b) 1 to 35 wt.-% preferably 2 to 25 wt.-%, more preferably 3 to 9 wt.-% of a heterophasic copolymer as a compatibilizer (B) according to any one of claims 1 to 4,

wherein the ratio of $MFR_2$ (blend (A)) / $MFR_2$ (compatibilizer(B)) ((ISO1133, 2.16 kg load at 230 °C), is in the range 0.5 to 2.0, whereby polypropylene-polyethylene blend (A) has one or more of the following properties:

(i) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm;
(ii) a content of fatty acid(s) as determined by using solid phase microextraction (HS-SPME-GC-MS) of 0.1 to 100 ppm
(iii) a content of polyamide(s) as determined by NMR of 0.05 to 1.5 wt.-%;
(iv) a content of polystyrene(s) as determined by NMR of 0.05 to 3.0 wt.-%

8. The polypropylene-polyethylene composition according to claim 7, wherein the compatibilizer (B) has a tensile modulus of at least 625 MPa, preferably at least 650 MPa (measured according to ISO 527-2).

9. The polypropylene-polyethylene composition according to claim 7 or 8 having one or more of the following features

- a Charpy notched impact strength (1eA) (non-instrumented, ISO 179-1 at +23 °C) of at least 6.0 $kJ/m^2$ and/or
- a Charpy notched impact strength (1eA) (non-instrumented, ISO 179-1 at
- 20 °C) of at least 2.5 $kJ/m^2$ and/or
- an elongation at break (ISO 527-2) of at least 300 %, and/or
- a tensile modulus of at least 800 mPa (ISO 527-2))

10. The polypropylene-polyethylene composition according to any one of claims 7 to 9, having:

- a tensile modulus (ISO 527-2 at 1 mm/min, +23°C; of at least 1200 MPa, and/or
- an elongation at break (ISO 527-2) of at least 40 %.

11. An article comprising, preferably consisting of the polypropylene-polyethylene composition according to any one of claims 7 to 10.


**Patentansprüche**

1. Heterophasisches Copolymer zur Kompatibilisierung einer Polypropylen/Polyethylen-Mischung (A), wobei die Polypropylen/Polyethylen-Mischung (A) eine oder mehrere der folgenden Eigenschaften aufweist:

(i) einen Gehalt an Limonen, bestimmt durch Festphasenmikroextraktion (HS-SPME-GC-MS), von 0,1 ppm bis 100 ppm, vorzugsweise von 0,1 ppm bis 50 ppm, noch bevorzugter von 0,1 ppm bis 20 ppm, am meisten bevorzugt von 0,1 ppm bis 5 ppm;
(ii) einen Gehalt an Fettsäure(n), bestimmt durch Festphasenmikroextraktion (HS-SPME-GC-MS), von 0,1 bis 100 ppm
(iii) einen Gehalt an Polyamid(en), bestimmt durch NMR, von 0,05 bis 1,5 Gew.-%;
(iv) einen Gehalt an Polystyrol(en), bestimmt durch NMR, von 0,05 bis 3,0 Gew.-%
wobei das heterophasige Copolymer eine Matrixphase und eine darin dispergierte Elastomerphase umfasst, wobei die Matrixphase ein statistisches Polypropylen-Copolymer einschließt, und wobei das heterophasige Copolymer aufweist:

- eine Schmelzflussrate $MFR_2$ (230°C, ISO1133) von 2,0 bis 30 g/10min, und
- mindestens einen Schmelzpunkt Tm1 im Bereich von 154 bis 168°C,
- gegebenenfalls einen zweiten Schmelzpunkt Tm2 im Bereich von 130 bis 160°C,

- gegebenenfalls einen zweiten oder dritten Schmelzpunkt Tm3 im Bereich von 110 bis 125°C,
- einen Xylol-kaltunlöslichen-Gehalt (XCI) von 60 bis 80 Gew.-%, vorzugsweise 70 bis 80 Gew.-% (ISO 16152, 1ed, 25°C), und
- einen Xylol-kaltlöslichem-Gehalt (XCS) von 20 bis 40 Gew.-%, vorzugsweise 20 bis 30 Gew.-% (ISO 16152, 1ed, 25°C),

wobei sich der Xylol-kaltunlösliche-Gehalt (XCI) und der Xylol-kaltlösliche-Gehalt (XCS) auf 100 Gew.-% addieren,

- einen Gehalt an von Ethylen abgeleiteten Einheiten im Xylol-kaltunlöslichen-Gehalt (XCI) von 2,0 bis 6,0 Gew.-%, vorzugsweise 2,3 bis 3,5 Gew.-% und
- einen Gehalt an von Ethylen abgeleiteten Einheiten im Xylol-kaltlöslichen-Gehalt (XCS) von 20,0 bis 40,0 Gew.-%, vorzugsweise von 25,0 bis 35,0 Gew.-%,

wobei der in Xylol-kaltlösliche-Gehalt (XCS) eine intrinsische Viskosität (gemessen in Decalin nach DIN ISO 1628/1 bei 135°C) von 2,1 dl/g bis weniger als 6,0 dl/g, vorzugsweise 3,0 bis 5,0 dl/g, besonders bevorzugt 3,3 bis 4,3 dl/g aufweist,
und wobei
gegebenenfalls das heterophasische Copolymer ein Zugmodul von mindestens 650 MPa (gemessen nach ISO 527-2) aufweist.

2. Heterophasiges Copolymer nach Anspruch 1, wobei die Matrixphase eine Mischung aus Polypropylen-Homopolymer und statistischem Polypropylen-Copolymer enthält, vorzugsweise daraus besteht.

3. Heterophasiges Copolymer nach Anspruch 1 oder 2, wobei der in Xylol-kaltlösliche-Gehalt (XCS) nur von Ethylen und Propylen abgeleitete Einheiten enthält.

4. Heterophasiges Copolymer nach einem der Ansprüche 1 bis 3, wobei das heterophasige Copolymer ein Reaktorblend aus einem Propylen-Homopolymer, einem statistischen Polypropylen-Copolymer und einem Ethylen-Propylen-Kautschuk ist.

5. Verwendung des heterophasischen Copolymers nach einem der Ansprüche 1 bis 4 als Kompatibilisator (B),

zur Veredelung eines Polypropylen-Polyethylen-Gemischs (A) mit
(A-1) Polypropylen und
(A-2) Polyethylen
wobei das Gewichtsverhältnis von Polypropylen (A-1) zu Polyethylen (A-2) 19:1 bis 1:19 beträgt
in Bezug auf mindestens eine oder mehrere der folgenden Eigenschaften

(i) Bruchdehnung (ISO 527-2)
(ii) Charpy-Kerbschlagzähigkeit (1eA) (nicht instrumentiert, ISO 179-1 bei +23 °C)
(iii) Charpy-Kerbschlagzähigkeit (1eA) (nicht instrumentiert, ISO 179-1 bei 0 °C);
(iv) Charpy-Kerbschlagzähigkeit (1eA) (nicht instrumentiert, ISO 179-1 bei -20 °C);
(v) Durchstoßfestigkeit (Energie, ISO7785-2 bei +23°C)
(vi) Tieftemperatur-Durchstoßfestigkeit (Energie, ISO 7765-2 bei 0°C oder - 20°C)

wobei der Kompatibilisator (B) in einer Menge von 1 bis 35 Gew.-%, vorzugsweise 2 bis 25 Gew.-%, besonders bevorzugt 3 bis 9 Gew.-%, bezogen auf die endgültige Zusammensetzung, verwendet wird,
wobei das Polypropylen-Polyethylen-Gemisch (A) eine oder mehrere der folgenden Eigenschaften aufweist:

(i) einen Gehalt an Limonen, bestimmt durch Festphasenmikroextraktion (HS-SPME-GC-MS), von 0,1 ppm bis 100 ppm, vorzugsweise von 0,1 ppm bis 50 ppm, noch bevorzugter von 0,1 ppm bis 20 ppm, am meisten bevorzugt von 0,1 ppm bis 5 ppm;
(ii) einen Gehalt an Fettsäure(n), bestimmt durch Festphasenmikroextraktion (HS-SPME-GC-MS), von 0,1 bis 100 ppm
(iii) einen Gehalt an Polyamid(en), bestimmt durch NMR, von 0,05 bis 1,5 Gew.-%;
(iv) einen Gehalt an Polystyrol(en), bestimmt durch NMR, von 0,05 bis 3,0 Gew.-%.

**6.** Verfahren zur Aufwertung

eines Polypropylen-Polyethylen-Gemisches (A), bestehend aus
(A-1) Polypropylen und
(A-2) Polyethylen
wobei das Gewichtsverhältnis von Polypropylen (A-1) zu Polyethylen (A-2) 19:1 bis 1:19 beträgt
in Bezug auf mindestens eine oder mehrere der folgenden Eigenschaften

(i) Bruchdehnung (ISO 527-2)
(ii) Charpy-Kerbschlagzähigkeit (1eA) (nicht instrumentiert, ISO 179-1 bei +23 °C)
(iii) Charpy-Kerbschlagzähigkeit (1eA) (nicht instrumentiert, ISO 179-1 bei 0 °C)
(iv) Charpy-Kerbschlagzähigkeit (1eA) (nicht instrumentiert, ISO 179-1 bei -20 °C)
(v) Durchstoßfestigkeit (Energie, ISO7785-2 bei +23°C)
(vi) Tieftemperatur-Durchstoßfestigkeit (Energie, ISO 7765-2 bei 0°C oder - 20°C)

durch Schmelzmischen der Polypropylen-Polyethylen-Mischung (A) mit einen Kompatibilisator (B) in einer Menge von 1 bis 35 Gew.-%, vorzugsweise 2 bis 25 Gew.-%, besonders bevorzugt 3 bis 9 Gew.-%, bezogen auf die Endzusammensetzung, wobei der Kompatibilisator (B)
ein heterophasisches Copolymer nach einem der Ansprüche 1 bis 4 ist, und
wobei die Polypropylen-Polyethylen-Mischung (A) eine oder mehrere der folgenden Eigenschaften aufweist:

(i) einen Gehalt an Limonen, bestimmt durch Festphasenmikroextraktion (HS-SPME-GC-MS), von 0,1 ppm bis 100 ppm, vorzugsweise von 0,1 ppm bis 50 ppm, noch bevorzugter von 0,1 ppm bis 20 ppm, am meisten bevorzugt von 0,1 ppm bis 5 ppm;
(ii) einen Gehalt an Fettsäure(n), bestimmt durch Festphasenmikroextraktion (HS-SPME-GC-MS), von 0,1 bis 100 ppm
(iii) einen Gehalt an Polyamid(en), bestimmt durch NMR, von 0,05 bis 1,5 Gew.-%;
(iv) einen Gehalt an Polystyrol(en), bestimmt durch NMR, von 0,05 bis 3,0 Gew.-%.

**7.** Polypropylen-Polyethylen-Zusammensetzung, erhältlich durch Mischen

a) 65 bis 99 Gew.-%, vorzugsweise 75 bis 98 Gew.-%, besonders bevorzugt 91 bis 97 Gew.-% einer Polypropylen-Polyethylen-Mischung (A), umfassend

A-1) Polypropylen,
A-2) Polyethylen,
wobei das Gewichtsverhältnis von Polypropylen zu Polyethylen zwischen 19:1 und 1:19 liegt
und

b) 1 bis 35 Gew.-%, vorzugsweise 2 bis 25 Gew.-%, besonders bevorzugt 3 bis 9 Gew.-% eines heterophasischen Copolymers als Kompatibilisator (B) nach einem der Ansprüche 1 bis 4,
wobei das Verhältnis von $MFR_2$ (Mischung (A)) / $MFR_2$ (Kompatibilisator (B)) ((ISO1133, 2,16 kg Last bei 230 °C), im Bereich von 0,5 bis 2,0 liegt,
wobei die Polypropylen-Polyethylen-Mischung (A) eine oder mehrere der folgenden Eigenschaften aufweist:

(i) einen Gehalt an Limonen, bestimmt durch Festphasenmikroextraktion (HS-SPME-GC-MS), von 0,1 ppm bis 100 ppm, vorzugsweise von 0,1 ppm bis 50 ppm, noch bevorzugter von 0,1 ppm bis 20 ppm, am meisten bevorzugt von 0,1 ppm bis 5 ppm;
(ii) einen Gehalt an Fettsäure(n), bestimmt durch Festphasenmikroextraktion (HS-SPME-GC-MS), von 0,1 bis 100 ppm
(iii) einen Gehalt an Polyamid(en), bestimmt durch NMR, von 0,05 bis 1,5 Gew.-%;
(iv) einen Gehalt an Polystyrol(en), bestimmt durch NMR, von 0,05 bis 3,0 Gew.-%

**8.** Polypropylen-Polyethylen-Zusammensetzung nach Anspruch 7, wobei der Kompatibilisator (B) einen Zugmodul von mindestens 625 MPa, vorzugsweise von mindestens 650 MPa (gemessen nach ISO 527-2) aufweist.

**9.** Polypropylen-Polyethylen-Zusammensetzung nach Anspruch 7 oder 8 mit einem oder mehreren der folgenden Merkmale

- eine Charpy-Kerbschlagzähigkeit (1eA) (nicht instrumentiert, ISO 179-1 bei +23 °C) von mindestens 6,0 kJ/m$^2$ und/oder
- eine Charpy-Kerbschlagzähigkeit (1eA) (nicht instrumentiert, ISO 179-1 bei - 20 °C) von mindestens 2,5 kJ/m$^2$ und/oder
- eine Bruchdehnung (ISO 527-2) von mindestens 300 %, und/oder
- einen Zug-E-Modul von mindestens 800 mPa (ISO 527-2)).

10. Polypropylen-Polyethylen-Zusammensetzung nach einem der Ansprüche 7 bis 9, mit:

- einem Zugmodul (ISO 527-2 bei 1 mm/min,+ 23°C, von mindestens 1200 MPa, und/oder
- einer Bruchdehnung (ISO 527-2) von mindestens 40 %.

11. Gegenstand, umfassend, vorzugsweise bestehend aus der Polypropylen-Polyethylen-Zusammensetzung nach einem der Ansprüche 7 bis 10.

**Revendications**

1. Copolymère hétérophasique destiné à la comptabilisation d'un mélange polypropylène/ polyéthylène (A), ledit mélange polypropylène/ polyéthylène (A) présentant une ou plusieurs des propriétés suivantes :

(i) une teneur en limonène, telle que déterminée à l'aide d'une microextraction en phase solide (HS-SPME-GC-MS) allant de 0,1 ppm à 100 ppm, de préférence de 0,1 ppm à 50 ppm, plus préférentiellement de 0,1 ppm à 20 ppm, le plus préférentiellement de 0,1 ppm à 5 ppm ;
(ii) une teneur en acide(s) gras, telle que déterminée à l'aide d'une microextraction en phase solide (HS-SPME-GC-MS) de 0,1 ppm à 100 ppm
(iii) une teneur en polyamide(s), telle que déterminée par RMN de 0,05 à 1,5 % en poids ;
(iv) une teneur en polystyrène(s), telle que déterminée par RMN de 0,05 à 3,0 % en poids, selon lequel ledit copolymère hétérophasique comprend une phase matricielle et une phase élastomère dispersée dans celle-ci, selon lequel la phase matricielle comporte un copolymère statistique de polypropylène, et selon lequel le copolymère hétérophasique présente

- un indice de fluidité à chaud MFR$_2$ (230°C, ISO1133) de 2,0 à 30 g/10 min, et
- au moins une température de fusion Tm1 dans la plage de 154 à 168°C,
- optionnellement, une deuxième température de fusion Tm2 dans la plage de 130 à 160°C,
- optionnellement, une deuxième ou troisième température de fusion Tm3 dans la plage de 110 à 125 °C,
- une teneur insoluble à froid dans le xylène (XCI) allant de 60 à 80 % en poids, de préférence 70 à 80 % en poids (ISO 16152, 1ed, 25°C), et
- une teneur soluble à froid dans le xylène (XCS) de 20 à 40 % en poids, de préférence 20 à 30 % en poids (ISO 16152, 1ed, 25°C), dans lequel la teneur insoluble à froid dans le xylène (XCI) et la teneur soluble à froid dans le xylène (XCS) s'additionnent pour atteindre 100 % en poids,
- une teneur en motifs dérivés de l'éthylène dans la teneur insoluble à froid dans le xylène (XCI) allant de 2,0 à 6,0 % en poids, de préférence 2,3 à 3,5 % en poids, et
- une teneur en motifs dérivés de l'éthylène dans la teneur soluble à froid dans le xylène (XCS) de 20,0 à 40,0 % en poids, de préférence 25,0 à 35,0 % en poids ;

la teneur soluble à froid dans le xylène (XCS) présentant une viscosité intrinsèque (mesurée dans de la décaline conformément à la norme DIN ISO 1628/1 à 135°C) de 2,1 dl/g à moins de 6,0 dl/g, de préférence 3,0 à 5,0 dl/g, plus préférentiellement 3,3 à 4,3 dl/g, et selon lequel optionnellement, le copolymère hétérophasique présente un module d'élasticité en traction d'au moins 650 MPa (mesuré selon la norme ISO 527-2).

2. Copolymère hétérophasique selon la revendication 1, selon lequel la phase matricielle comporte, de préférence consiste en, un mélange homopolymère de polypropylène-copolymère statistique de polypropylène.

3. Copolymère hétérophasique selon la revendication 1 ou 2, selon lequel la teneur soluble à froid dans le xylène (XCS) comporte des motifs uniquement dérivés de l'éthylène et du propylène.

4. Copolymère hétérophasique selon l'une des revendications 1 à 3, selon lequel le copolymère hétérophasique est un mélange en réacteur d'un homopolymère de propylène, d'un copolymère statistique de propylène et d'un caoutchouc éthylène-propylène.

**5.** Utilisation du copolymère hétérophasique selon l'une des revendications 1 à 4 en tant qu'agent de compatibilité (B),

pour améliorer un mélange polypropylène-polyéthylène (A) comprenant
(A-1) du polypropylène et
(A-2) du polyéthylène

selon laquelle le rapport pondéral du polypropylène (A-1) au polyéthylène (A-2) est 19:1 à 1:19
pour au moins une ou plusieurs des propriétés suivantes

(i) allongement à la rupture (ISO 527-2)
(ii) résistance au choc Charpy d'éprouvettes entaillées (1eA) (non instrumentée, ISO 179-1 à +23°C) ;
(iii) résistance au choc Charpy d'éprouvettes entaillées (1eA) (non instrumentée, ISO 179-1 à 0°C) ;
(iv) résistance au choc Charpy d'éprouvettes entaillées (1eA) (non instrumentée, ISO 179-1 à -20°C) ;
(v) résistance au percement (énergie, ISO7785-2 à +23°C)
(vi) résistance au percement à basse température (énergie, ISO 7765-2 à 0°C ou -20°C), selon laquelle l'agent de compatibilité (B) est utilisé en une quantité de 1 à 35 % en poids, de préférence 2 à 25 % en poids, plus préférentiellement 3 à 9 % en poids par rapport à la composition finale, selon laquelle le mélange polypropylène-polyéthylène (A) présente une ou plusieurs des propriétés suivantes :

(i) une teneur en limonène, telle que déterminée à l'aide d'une microextraction en phase solide (HS-SPME-GC-MS) allant de 0,1 ppm à 100 ppm, de préférence de 0,1 ppm à 50 ppm, plus préférentiellement de 0,1 ppm à 20 ppm, le plus préférentiellement de 0,1 ppm à 5 ppm ;
(ii) une teneur en acide(s) gras, telle que déterminée à l'aide d'une microextraction en phase solide (HS-SPME-GC-MS) de 0,1 ppm à 100 ppm
(iii) une teneur en polyamide(s), telle que déterminée par RMN de 0,05 à 1,5 % en poids ;
(iv) une teneur en polystyrène(s), telle que déterminée par RMN de 0,05 à 3,0 % en poids.

**6.** Procédé d'amélioration

d'un mélange polypropylène-polyéthylène (A) comprenant
(A-1) du polypropylène et
(A-2) du polyéthylène

selon lequel le rapport pondéral du polypropylène (A-1) au polyéthylène (A-2) est 19:1 à 1:19
pour au moins une ou plusieurs des propriétés suivantes

(i) allongement à la rupture (ISO 527-2)
(ii) résistance au choc Charpy d'éprouvettes entaillées (1eA) (non instrumentée, ISO 179-1 à +23°C)
(iii) résistance au choc Charpy d'éprouvettes entaillées (1eA) (non instrumentée, ISO 179-1 à 0°C)
(iv) résistance au choc Charpy d'éprouvettes entaillées (1eA) (non instrumentée, ISO 179-1 à -20°C)
(v) résistance au percement (énergie, ISO7785-2 à +23°C)
(vi) résistance au percement à basse température (énergie, ISO 7765-2 à 0 °C ou -20°C) par mélange à l'état fondu dudit mélange polypropylène-polyéthylène (A) avec

un agent de compatibilité (B) en une quantité de
1 à 35 % en poids, de préférence 2 à 25 % en poids, plus préférentiellement 3 à 9 % en poids par rapport à la composition finale, selon lequel l'agent de compatibilité (B) est un copolymère hétérophasique selon l'une des revendications 1 à 4, et selon lequel le mélange polypropylène-polyéthylène (A) présente une ou plusieurs des propriétés suivantes :

(i) une teneur en limonène, telle que déterminée à l'aide d'une microextraction en phase solide (HS-SPME-GC-MS) allant de 0,1 ppm à 100 ppm, de préférence de 0,1 ppm à 50 ppm, plus préférentiellement de 0,1 ppm à 20 ppm, le plus préférentiellement de 0,1 ppm à 5 ppm ;
(ii) une teneur en acide(s) gras, telle que déterminée à l'aide d'une microextraction en phase solide (HS-SPME-GC-MS) de 0,1 ppm à 100 ppm

(iii) une teneur en polyamide(s), telle que déterminée par RMN de 0,05 à 1,5 % en poids ;

(iv) une teneur en polystyrène(s), telle que déterminée par RMN de 0,05 à 3,0 % en poids.

7.  Composition de polypropylène-polyéthylène pouvant être obtenue par mélange de

  a) 65 à 99 % en poids, de préférence 75 à 98 % en poids, plus préférentiellement 91 à 97 % en poids

  d'un mélange polypropylène-polyéthylène (A) comprenant
  A-1) du polypropylène,
  A-2) du polyéthylène,
  dans laquelle le rapport en poids du polypropylène au polyéthylène est de 19:1 à 1:19, et

  b) 1 à 35 % en poids, de préférence 2 à 25 % en poids, plus préférentiellement 3 à 9 % en poids d'un copolymère hétérophasique en tant qu'agent de compatibilité (B) selon l'une des revendications 1 à 4,

  dans laquelle le rapport de $MFR_2$ (mélange (A)) / $MFR_2$ (agent de compatibilité (B)) ((ISO1133, charge de 2,16 kg à 230 °C), se situe dans la plage de 0,5 à 2,0,
  selon laquelle le mélange polypropylène-polyéthylène (A) présente une ou plusieurs des propriétés suivantes :

  (i) une teneur en limonène, telle que déterminée à l'aide d'une microextraction en phase solide (HS-SPME-GC-MS) allant de 0,1 ppm à 100 ppm, de préférence de 0,1 ppm à 50 ppm, plus préférentiellement de 0,1 ppm à 20 ppm, le plus préférentiellement de 0,1 ppm à 5 ppm ;
  (ii) une teneur en acide(s) gras, telle que déterminée à l'aide d'une microextraction en phase solide (HS-SPME-GC-MS) de 0,1 ppm à 100 ppm
  (iii) une teneur en polyamide(s), telle que déterminée par RMN de 0,05 à 1,5 % en poids ;
  (iv) une teneur en polystyrène(s), telle que déterminée par RMN de 0,05 à 3,0 % en poids.

8.  Composition de polypropylène-polyéthylène selon la revendication 7, dans laquelle l'agent de compatibilité (B) présente un module d'élasticité en traction d'au moins 625 MPa, de préférence d'au moins 650 MPa (mesuré conformément à la norme ISO 527-2).

9.  Composition de polypropylène-polyéthylène selon la revendication 7 ou 8 présentant une ou plusieurs des caractéristiques suivantes

  - une résistance au choc Charpy d'éprouvettes entaillées (1eA) (non instrumentée, ISO 179-1 à +23°C) d'au moins 6,0 kJ/m$^2$ et/ou
  - une résistance au choc Charpy d'éprouvettes entaillées (1eA) (non instrumentée, ISO 179-1 à -20°C) d'au moins 2,5 kJ/m$^2$ et/ou
  - un allongement à la rupture (ISO 527-2) d'au moins 300 %, et/ou
  - un module d'élasticité en traction d'au moins 800 mPa (ISO 527-2)).

10.  Composition de polypropylène-polyéthylène selon l'une des revendications 7 à 9, présentant :

  - un module d'élasticité en traction (ISO 527-2 à 1 mm/min, +23°C ; d'au moins 1200 MPa, et/ou
  - un allongement à la rupture (ISO 527-2) d'au moins **40** %.

11.  Article comprenant, de préférence consistant en, la composition de polypropylène-polyéthylène selon l'une des revendications 7 à 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007071494 A1

**Non-patent literature cited in the description**

- **JUN XU et al.** *Macromolecules*, 2018, vol. 51 (21), 8585-8596
- **MUNRO J. et al.** *Proc. SPE ANTEC*, 2017, 961-966
- **ZHOU, Z. et al.** *J. Mag. Reson.*, 2007, vol. 187, 225
- **BUSICO, V. et al.** *Macromol. Rapid Commun.*, 2007, vol. 28, 1128